Europäisches Patentamt

European Patent Office

Office européen des brevets

(11) Numéro de publication: **0 366 571**
**A1**

## (12) DEMANDE DE BREVET EUROPEEN

(21) Numéro de dépôt: 89420403.1

(51) Int. Cl.5: **B60P 3/077**

(22) Date de dépôt: 24.10.89

(30) Priorité: 28.10.88 FR 8814965
17.10.89 FR 8914011

(43) Date de publication de la demande:
**02.05.90 Bulletin 90/18**

(84) Etats contractants désignés:
**BE DE ES GB IT**

(71) Demandeur: **SOCIETE DE FABRICATION ET
DE COMMERCIALISATION - SOFACO-
(Société à Responsabilité Limitée)
25 rue Louis Chatain Z.I. La Soie d'Izieux
F-42400 Saint Chamond(FR)**

(72) Inventeur: **Francon, Gérard
11 Rue Moleyre
F-42400 Saint Chamond(FR)**
Inventeur: **Gorgy, Bernard
1 Impasse du Midi
F-42400 Saint Chamond(FR)**
Inventeur: **Escot, André
14 rue des Roses Farnay
F-42320 La Grand Croix(FR)**
Inventeur: **Souchon, Jean
27 Rue Albert Camus
F-42320 Saint Paul en Jarez(FR)**

(74) Mandataire: Dupuis, François
**Cabinet Charras, 3 Place de l'Hôtel-de-Ville,
BP 203
F-42005 St. Etienne Cédex 1(FR)**

(54) **Dispositif de calage de véhicules disposés sur des planchers de remorques de transport ou wagons de chemin de fer et moyens de transports similaires.**

(57) Ce dispositif est remarquable en ce qu'il comprend des rails de guidage (4) (28) de part et d'autre de l'aire de stockage des véhicules, lesdits rails étant profilés pour recevoir à déplacement contrôlé et limité des moyens sous forme de curseurs (5) (29) à partir desquels sont associés les moyens de calage (6) (30), lesdits curseur étant agencés directement ou avec des moyens pour venir après orientation angulaire en butée d'appui pour coopérer avec le profil des rails de guidage afin d'assurer un blocage en position des moyens de calage sans autres moyens de liaison intermédiaire.

FIG.3

## Dispositif de calage de véhicules disposés sur des planchers de remorques de transport ou wagons de chemin de fer et moyens de transport similaires

L'invention a pour objet un dispositif de calage de véhicules disposés sur des planchers de remorques de transport ou wagons de chemin de fer et moyens de transport similaires.

L'invention se rattache au secteur technique des moyens de transport de charges et en particulier de véhicules automobiles.

Pour acheminer les véhicules neufs et d'occasion de leur lieu de fabrication vers les concessionnaires automobiles, garages ou services similaires, les véhicules sont transportés soit par chemin de fer, soit par des camions ou semi-remorques ou remorques aménagées à cet effet et autorisant le rangement simultané en long et éventuellement côte à côte d'une ou de plusieurs voitures, ceci pour permettre une diminution des frais de transport.

Dans d'autres situations quelque soit l'état du véhicule, neuf ou non, on peut être amené à transporter des voitures par car-ferries, et similaires, à l'occasion de voyages par exemple.

Les voitures qui sont ainsi stationnées sur la ou les plateformes du transporteur doivent être maintenues par des cales disposées entre les roues, indépendamment de l'utilisation et serrage du frein à main. Les cales sont un moyen complémentaire et obligatoire pour tenter d'assurer la stabilité des voitures pendant le trajet. Compte tenu du mode de transport par voie ferrée ou route, on constate l'exercice de forces, de vibrations et secousses très fortes qui tendent à déplacer la position des voitures dans un plan transversal en dépit de l'usage des cales, celles-ci sont posées sur le plancher, étant elles-mêmes soumises à déplacement transversal.

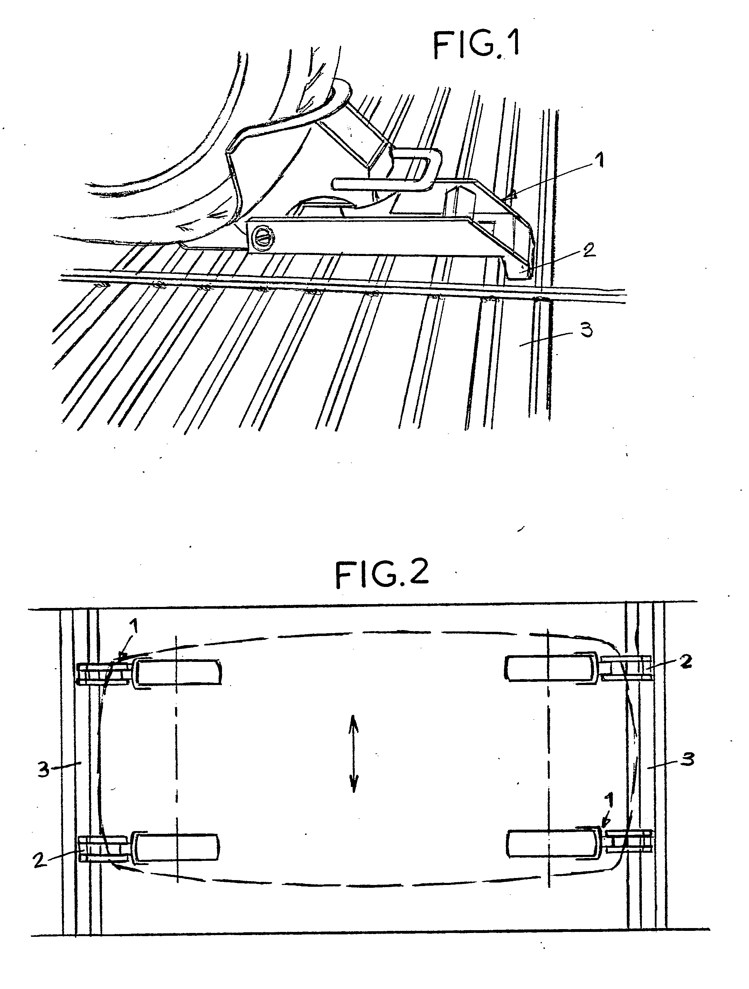

Selon la technique actuelle, on utilise un type de cales adapté avec un type de plancher. Celui-ci peut être réalisé par exemple avec une tôle lisse, une tôle ondulée avec transversalement une pluralité de nervures, ou sous forme d'un caillebotis. Il est donc déjà nécessaire d'avoir un type de cales par type de plancher. Dans tous les cas, les cales sont disposées soit par derrière les quatre roues du véhicule soit par couple de deux autour des roues avant ou arrière. On a illustré figures 1 et 2 des dessins, un type de cales (1) selon l'art antérieur. Ce sont des éléments modulaires indépendants. Leur semelle inférieure est agencée pour recevoir des plots (2) de centrage et guidage entre les nervures (3) du plancher. Elles sont toujours disposées dans le plan des roues du véhicule, c'est-à-dire perpendiculaire aux nervures du plancher.

Les cales de type ne peuvent être correctement prositionnées en maintenant serrées les roues, et il y a toujours des jeux de montage. Par effet de déplacement du wagon transporteur sur les rails et les vibrations l'accompagnant, ou sur la remorque d'un véhicule routier de transport, les charges ont tendance à se déplacer latéralement et les cales également. Ainsi les véhicules peuvent être ballotés, se toucher les uns les autres lorsqu'ils sont positionnés par paire dans le plan transversal du transporteur. Ils peuvent également toucher les longerons ou montants de la structure porteuse situés près de l'extérieur créant ainsi une source de déteriorations. Par ailleurs, les cales sont réalisées à partir de plusieurs éléments de construction et sont coûteuses.

Un autre problème réside dans la difficulté de manipulation des cales du type précité. On conçoit en effet qu'elles doivent être relativement lourdes pour assurer une force de retenue ou de coincement du véhicule transporté. Leur manipulation n'est pas aisé et peu pratique.

Un autre problème réside dans le rangement de cales non utilisées. En général, on prévoit de part et d'autre de la zone de stockage des véhicules transportés, des endroits de rangement des cales qui se situent près des côtés latéraux ouverts du transporteur.

Il est arrivé souvent qu'en cas de mauvais rangement, les cales puissent être éjectées du véhicule transporteur pouvant ainsi être source d'accidents.

Un autre problème réside dans le fait que les cales actuelles sont aménagées pour recevoir des flasques ou berceaux profilés pour s'adapter et entourer la partie de pneu en regard de chaque voiture. On peut être amené selon les types de véhicules transportés à avoir des jeux de cales particuliers, et également les cales qui ne peuvent s'adapter quelle que soit la hauteur du soubassement de chaque véhicule.

On comprend ainsi que les problèmes rencontrés actuellement pouvant se combiner en fonction ou non des conditions de transport et des véhicules transportés, présentent de très nombreux inconvénients.

Il a été proposé des dispositifs de calage angulaire par rapport à des rails de guidage dans les brevets FR 2419198, FR 2376017, EP 0284523. Ces dispositifs sont complexes et utilisent des systèmes d'articulation par bielettes ou bras susceptibles d'établir entre la cale, le rail et le bras des agencements en triangulation ou en parallélogramme déformable peu pratiques à manipuler et qui sont en outre d'un coût de revient élevé et nécessitant dans certains cas une perforation du rail de guidage pour assurer un verrouillage en position. De tels dispositifs ne sont pas satisfaisants.

L'objet de l'invention vise donc à remédier à ces inconvénients.

Un des buts de l'invention est de concevoir un dispositif particulièrement apte à maintenir en place les véhicules quelles que soient les sollicitations dûes au transport et éviter leur déplacement latéral.

Un autre but selon l'invention est de concevoir un dispositif qui autorise une manipulation aisée des cales.

Un autre but selon l'invention est de concevoir un dispositif qui assure un stockage parfait des cales.

Un autre but de l'invention est de concevoir un dispositif utilisable quel que soit l'empattement du véhicule transporté et sa hauteur de soubassement.

Un autre but selon l'invention est de ne pas lier ce type de cales à un type de plancher du véhicule transporteur.

Selon une première caractéristique de l'invention, le dispositif est remarquable en ce qu'il comprend des rails de guidage de part et d'autre de l'aire de stockage des véhicules, lesdits rails étant profilés pour recevoir à déplacement contrôlé et limité des moyens sous forme de curseurs à partir des quels sont associés les moyens de calage, lesdits curseurs étant agencés directement ou avec des moyens pour venir après orientation angulaire en butée d'appui pour coopérer avec le profil des rails de guidage afin d'assurer un blocage en position des moyens de calage sans autres moyens de liaison intermédiaire.

Selon une autre caractéristique, lesdits moyens de calage peuvent être pivotés angulairement pour être soit en position de stockage sur les rails, soit en position de butée contre les roues du véhicule à retenir.

Selon une autre caractéristique, dans une première mise en oeuvre chaque curseur présente un profil en boucle non fermée s'engageant et coulissant sur le profil du rail de guidage ; chaque curseur présentant dans chaque partie supérieure en débordement un moyen de liaison et d'articulation autour duquel pivote de manière contrôlée dans un plan horizontal un moyen intermédiaire associé directement ou indirectement au longeron formant cale.

Selon une autre caractéristique, chaque curseur est agencé pour recevoir un moyen de verrouillage et blocage en position du dispositif sur le rail de guidage et autorisant le pivotement contrôlé du longeron formant cale.

Selon une autre caractéristique en une autre mise en oeuvre le moyen curseur est agencé avec un profil en U recevant à sa partie supérieure l'extrémité d'un profilé constituant la cale, et étant agencé entre ses ailes latérales avec des pattes profilées identiques orientées et fixées en regard, cesdites pattes présentant chacune deux zones distinctes servant d'une part au positionnement du curseur sur le rail de guidage et d'autre part au blocage du curseur angulairement sur le rail et donc de la cale ; et en ce que les pattes précitées et les ailes du curseur définissent entre elles une cavité autorisant le positionnement d'un chapeau ou patin venant en appui sur la face supérieure du rail à l'encontre de moyens élastiques.

Ces caractéristiques et d'autres encore ressortiront bien de la suite de la description.

Pour fixer l'objet de l'invention illustrée d'une manière non limitative aux figures des dessins où :

La figure 1 est une vue à caractère schématique illustrant un exemple de cale selon l'art antérieur pour un plancher à nervures.

La figure 2 est une vue en plan illustrant selon l'art antérieur la position d'une pluralité de cales pour le maintien d'une voiture.

La figure 3 est une vue en plan à caractère schématique illustrant le positionnement du dispositif à cales selon l'invention, en cas d'utilisation dans une première mise en oeuvre.

La figure 4 est une vue semblable à la figure 3 dans une seconde mise en oeuvre.

La figure 5 est une vue du dispositif selon l'invention en position repos de non utilisation.

La figure 6 est une vue en perspective éclatée avant montage du dispositif selon l'invention dans une première variante de réalisation.

La figure 7 est une vue en coupe longitudinale du dispositif à cale monté sur rails selon la figure 6.

La figure 8 est une vue partielle illustrant le chevauchement de la partie cale du dispositif selon l'invention en position repos sur le rail, selon la mise en oeuvre de la figure 6.

La figure 9 est une vue à caractère schématique illustrant le déplacement du dispositif selon l'invention sur le rail de guidage, selon la mise en oeuvre de la figure 6.

La figure 10 est une vue partielle à grande échelle illustrant le blocage en position de la cale, selon la mise en oeuvre de la figure 6.

La figure 11 est une vue en perspective éclatée avant montage du dispositif selon l'invention dans une seconde réalisation.

La figure 12 est une vue partielle en coupe illustrant le dispositif selon la figure 11 dans une position d'orientation par rapport au rail de guidage, à coulissement libre.

La figure 13 est une vue partielle en coupe semblable à la figure 12 du dispositif en position de blocage sur le rail.

La figure 14 est une vue en plan du dispositif selon les figures 11 à 13 dans une position de butée en position.

La figure 15 est une vue en coupe transversale du dispositif positionné sur le rail, selon les figures 11 à 14.

La figure 16 est une vue en perspective illustrant séparément les principaux composants d'un dispositif selon l'invention dans une autre variante de réalisation.

- La figure 17 est une vue en coupe transversale considérée suivant la ligne 17-17 de la figure illustrant le dispositif en position de coulissement sur le rail de guidage.

- La figure 18est une vue en coupe longitudinale considérée suivant la ligne 18-18 de la figure 17 représentant le dispositif dans la position de coulissement.

- La figure 19 est une vue en plan et en section partielle considérée suivant la ligne 19-19 de la figure 18 montrant les patins de guidage en position de coulissement du dispositif suf le rail.

- Les figures 20, 21, et 22 sont des vues semblables aux figures 17, 18, et 19 représentant le dispositif en position abaissée et pivotée correspondant au blocage par raport au rail.

Afin de rendre plus concret l'objet de l'invention, on le décrit maintenant d'une manière non limitative illustrée aux figures des dessins.

Le dispositif selon l'invention est utilisable quelle que soit la constitution du plancher du transporteur. Le terme transporteur étant considéré dans son sens général et pouvant être des wagons de trains, des remorques de camions, des car-ferries, et de manière générale tous moyens assurant un transport de véhicules neufs ou usagés dans des conditions d'un déplacement ponctuel et particulier.

Ainsi le dispositif est valable quelle que soit la forme du plancher, qui peut être lisse, nervuré, grillagé. En outre, le dispositif selon l'invention est également utilisable en dépit des ondulations que peut présenter le plancher en longueur.

Le dispositif selon l'invention consiste à utiliser et positionner des rails de guidage (4) de part et d'autre de l'aire de stockage des véhicules, lesdits rails étant profilés pour recevoir à déplacement contrôlé et variable des moyens sous forme de curseurs (5) à partir desquels sont associés des moyens de calage (6).

Ces curseurs sont agencés directement ou avec des moyens rapportés pour venir après orientation angulaire en butée d'appui pour coopérer avec le profilé des rails de guidage afin d'assurer un blocage en position des moyens de calage sans autres moyens de liaison intermédiaires.

Dans une première mise en oeuvre, les moyens de calage associés aux curseurs peuvent être pivotés angulairement pour être soit en position de stockage sur les rails soit en position de butée contre les roues d'un véhicule en appui sur le plancher.

Lesdits moyens de calage (6) sont avantageusement disposés en position de butée et de maintien des roues des véhicules dans un plan angulaire non perpendiculaire à l'axe longitudinal du plancher du transporteur et du rail de guidage, la combinaison des positions des différents moyens de calage sur les roues d'un même véhicule assurant son maintien longitudinal et transversal.

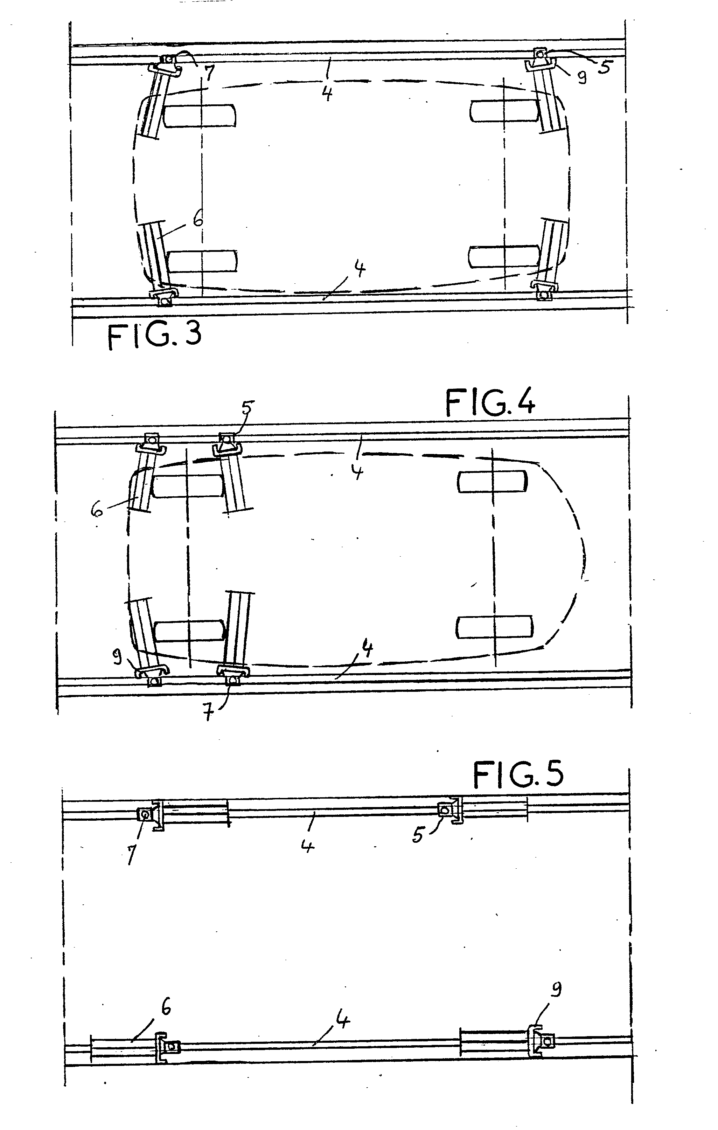

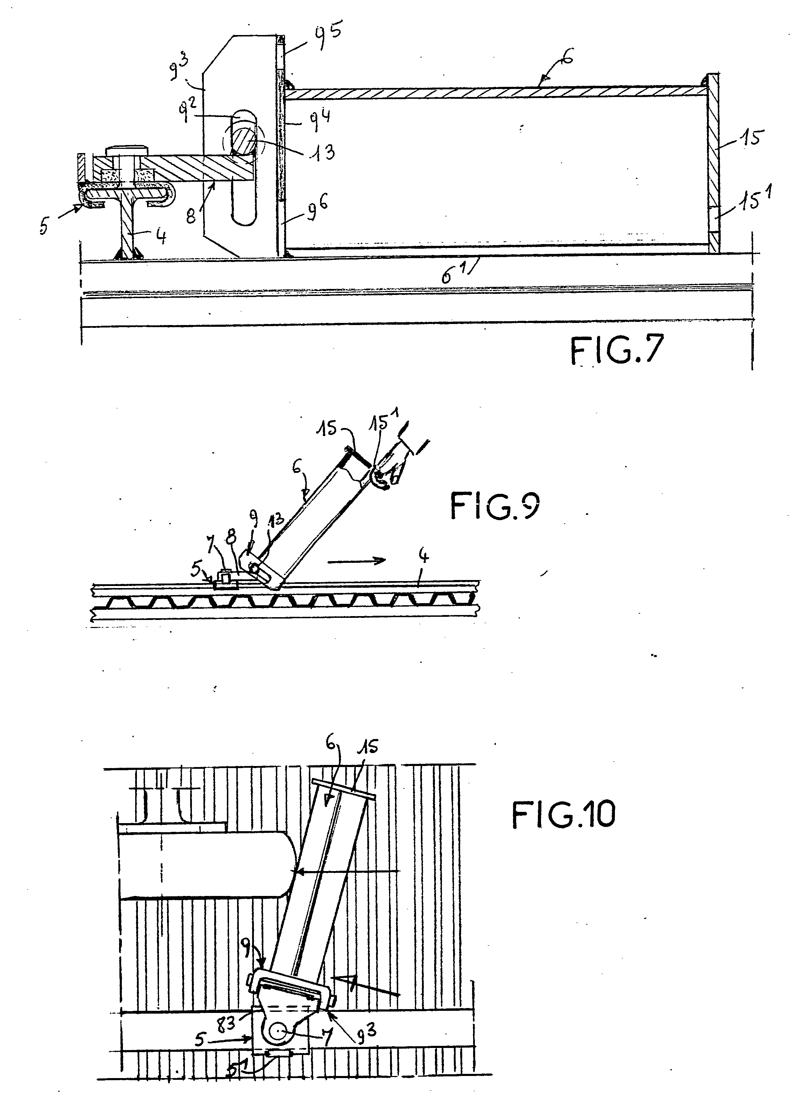

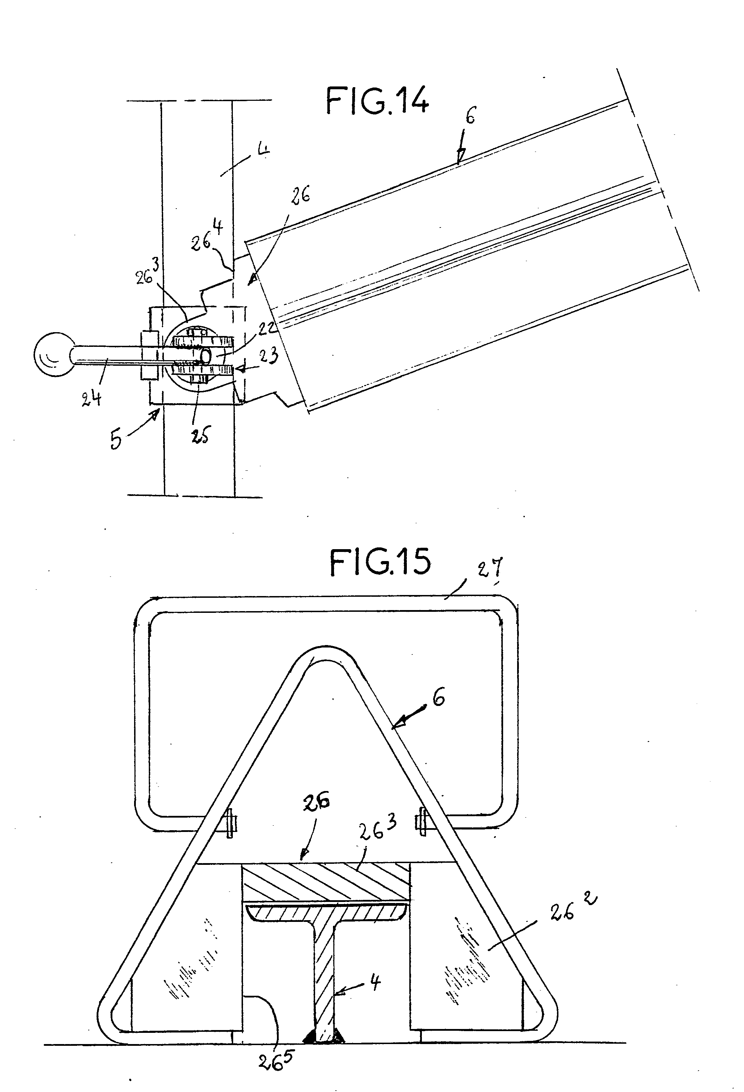

Dans une mise en oeuvre particulière du dispositif selon l'invention illustré aux figures 2 à 15, on dispose deux rails de guidage (4) de part et d'autre de l'aire de stockage de véhicule. Si le transporteur permet le positionnement latéral des deux véhicules, on peut alors soit disposer deux couples de rails (4), soit prévoir trois rails dont un intermédiaire recevant alternativement en position les moyens de maintien et calage des roues des véhicules disposés de part et d'autre. La largeur entre les rails est établie de manière suffisante pour permettre le chargement de tous types de véhicules. Les rails sont disposés fixement sur le plancher et maintenus par tous moyens de liaison appropriés.

Chaque rail présente un profil en T, la base (4.1) étant fixée sur le plancher et la partie supérieure (4.2) servant de points de guidage d'une pluralité de curseurs (5), chacun étant associé à une cale.

Chaque curseur présente ainsi un profil en boucle non fermée susceptible de s'engager et coulisser sur le profil correspondant du rail. Une patte (5.1) formant butée est disposée avantageusement près de l'une des extrémités du curseur pour limiter l'orientation angulaire de la cale. On peut cependant dans certains cas, notamment pour des curseurs susceptibles d'être disposés sur des rails intermédiaires, supprimer ladite patte (5.1). Ainsi la partie formant cale peut être pivotée tout autour d'un moyen de liaison et d'articulation (7) formant axe établi sur le curseur.

Ainsi chaque curseur (5) reçoit un axe (7) de liaison formant cale, celui-ci éant agencé avec un moyen intermédiaire (M) de liaison.

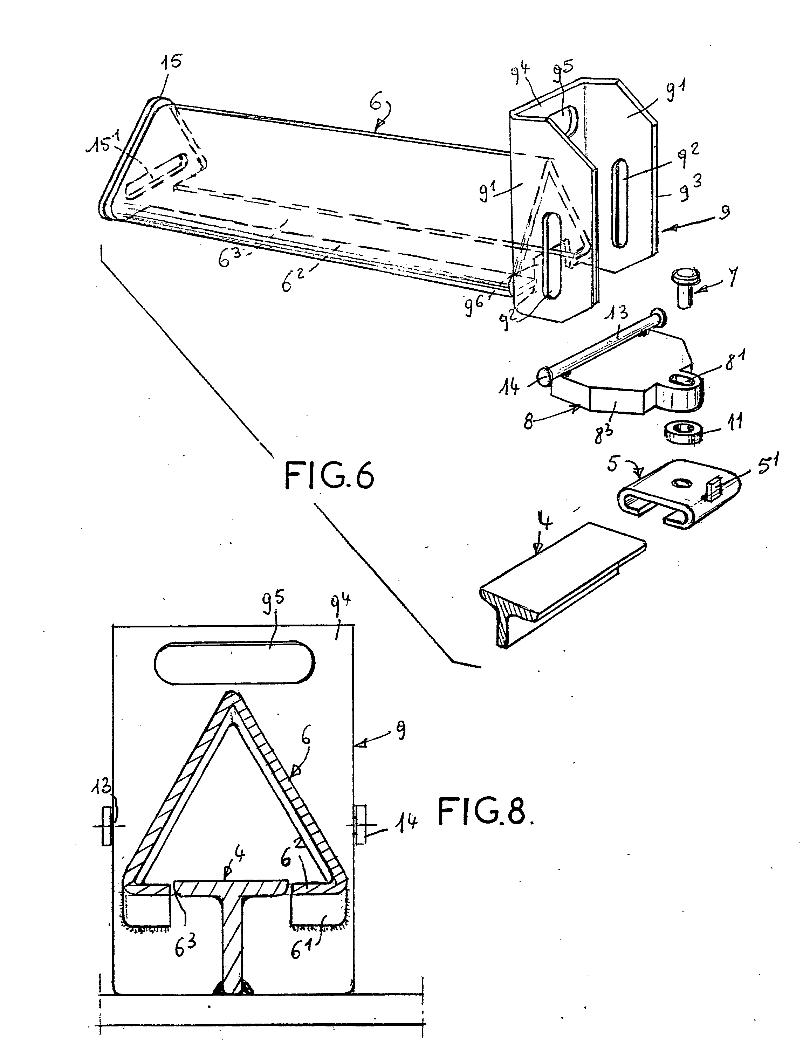

On a illustré aux figures 6 à 10 une première mise en oeuvre possible de ce moyen intermédiaire et la cale elle-même.

Dans cette réalisation, chaque curseur reçoit dans sa partie supérieure en débordement un axe de liaison et semelle support (8) associée à un élément profilé (9) en U à partir duquel est solidarisée la partie cale (6). Plus précisémment, le moyen de liaison et d'articulation (7) est un axe formant moyeu autour duquel pivote la semelle support (8) dans un plan horizontal.

Ladite semelle support (8) présente une lumière oblongue (8.1) pouvant autoriser son déplacement et orientation relative par raport à l'axe. Une bague de compression (11) est disposée sur une partie de la hauteur de l'axe (7), qui est par exemple rivé au curseur, sa partie supérieure épaulée formant un bouchon.

Ladite semelle support présente intérieurement un chambrage (8.2) pour la réception et logement de la bague de compression. Une telle disposition permet un mouvement axial de la semelle support par rapport à l'axe d'articulation.

Ladite semelle support présente en outre un profil latéral à pans coupés (8.3) de dégagement de part et d'autre de son axe de pivotement. Dans sa partie arrière la semelle support est agencée pour recevoir directement ou de manière rapportée un moyen d'accouplement et de liaison avec un élément profilé (9) de préhension manuelle et solidaire du moyen de calage (6) ce moyen d'accouplement est un axe (13) débordant par ses extrémités du plan de ladite semelle support.

Sur cet axe est monté à articulation contrôlé et limité l'élément profilé (9) en forme de U constituant la base support de la cale et le moyen de préhension et d'orientation de cette dernière. Plus précisémment, cet élément profilé vient en arrière de la semelle supporte dans un plan vertical et ses ailes ou branches (9.1) latérales sont agencées avec des lumières oblongues (9.2) dans lesquelles s'ajustent les extrémités de l'axe (13) ; des moyens de liaison et de fixation (14) sont disposés en bout de l'axe (13) pour assurer la liaison avec l'élément profilé (9). Ainsi les ailes latérales du profilé (9) recouvrent partiellement les côtés latéraux de la semelle support. Les chants (9.3) aux extrémités desdites ailes de l'élément (9) sont profilés pour venir en butée d'appui contre le rail ainsi qu'il sera exposé par la suite. L'élément profilé (9) est par ailleurs agencé sur sa face de fond (9.4) avec dans sa partie supérieure une découpe (9.5) oblongue autorisant sa préhension manuelle et une découpe (9.6) dans sa partie inférieure permettant son chevauchement sur le rail de guidage. Du côté opposé auxdites ailes (9.1) et donc de la semelle support est disposée la partie cale proprement dite (6). Celle-ci est avantageusement réalisée sous la forme d'un longeron profilé de grande longueur, ayant une forme en section avantageusement triangulée, avec la base (6.1) en regard du plancher. La cale est ainsi solidarisée à l'élément profilé (9) par thermo-soudure ou autre moyen de fixation approprié. Dans sa partie inférieure formant la base, le longeron est agencé avec des ailes (6.2) en retour définissant entre elles une fente longitudinale (6.3) de passage du rail autorisant ainsi le chevauchement de la cale sur le rail de guidage. De par ses ailes (6.2) le longeron vient normalement en appui sur le plancher en position d'utilisation, ainsi que la partie inférieure de l'élément profilé (9). L'extrémité libre du longeron présente un flasque d'appui (15) au sol, ledit flasque étant agencé avec une ouverture (15.1) autorisant la préhension manuelle du dispositif pour l'utilisateur, pour faciliter son déplacement le long du rail de guidage.

Il convient dès lors d'exposer le mode d'utilisation du dispositif selon l'invention dans cette première réalisation.

Les rails de guidage reçoivent à coulissement une pluralité de dispositifs qui sont enfilés et positionnés à l'aide de leur partie formant curseur. Afin d'assurer cette manipulation et déplacement à l'endroit sélectionné sur le ou les rails, ou en vue du stockage, l'opérateur peut saisir manuellement la partie longeron formant cale en introduisant ses doigts dans l'ouverture profilée sur le flasque (15). En cas de stockage le longeron formant cale est alors orienté dans le même plan axial que les rails et vient en superposition et chevauchement sur le rail correspondant. L'élément profilé (9) chevauche également le profil du rail et vient en appui par sa partie inférieure sur le plancher. L'axe (13) associé à la semelle support se trouve ainsi dans la partie haute des lumières formées sur les ailes de l'élément profilé. L'ensemble est ainsi parfaitement verrouillé en position.

En vue de l'utilisation du dispositif, l'opérateur saisit alors l'élément profilé (9) par son ouverture de préhension (9,5) et peut ainsi soulever ledit élément et donc le longeron formant cale de manière à le dégager par rapport au rail de guidage, Le dégagement étant effectué, l'opérateur fait pivoter le longeron formant cale par rapport à l'axe d'articulation (7).

Le longeron latéral balaie en quelque sorte la zone avoisinante de la roue et vient en appui contre celle-ci. De manière avantageuse grâce au profil particulier de la semelle support qui est pivotée en même temps que le longeron, ce dernier peut prendre une position angulaire non directement perpendiculaire à l'axe longitudinal du plancher ou l'axe du rail de guidage. Ainsi le longeron formant cale est orienté en oblique, tandis que les ailes de l'élément profilé viennent en appui et butée contre le profil en regard du rail. Dans cette situation, la semelle support est orientée angulairement.

Dans cette première réalisation pour débloquer les ensembles précités en contact avec les roues, il suffit d'exercer une pression ou force ponctuelle sur l'élément profilé (9) ou la semelle support pour dégager et faire pivoter la partie câle.

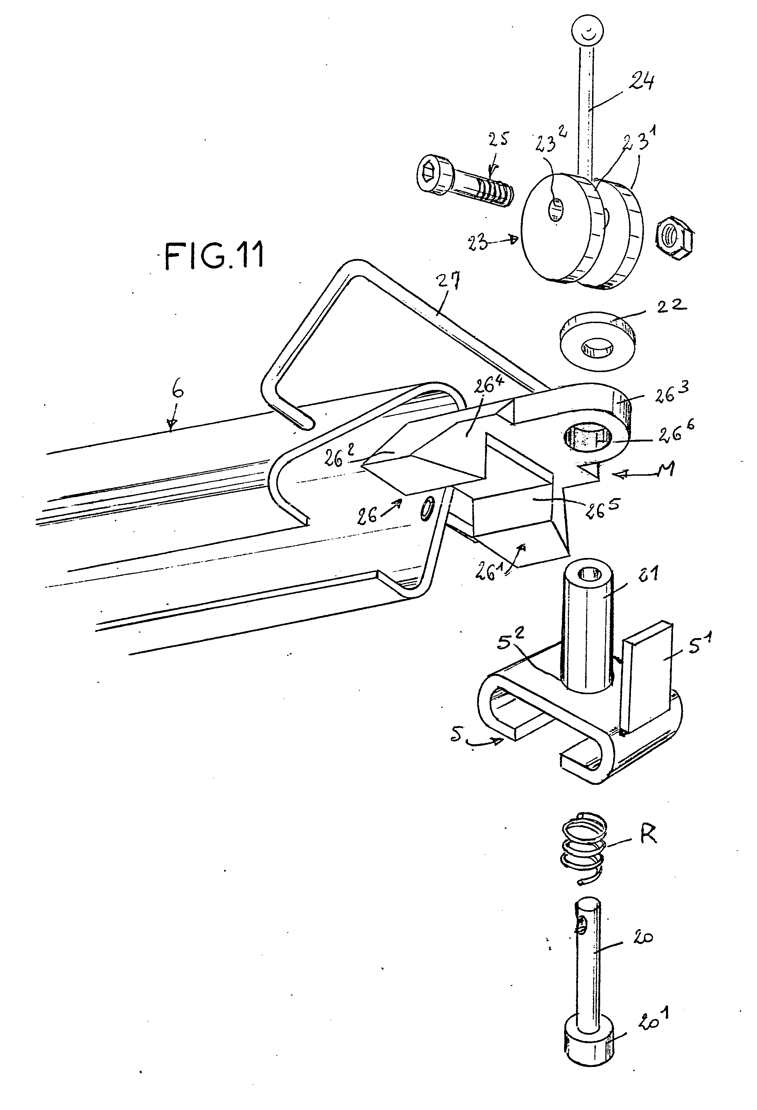

Il convient maintenant de se référer à la seconde mise en oeuvre du dispositif illustré aux figures 11 à 15. On précise préalablement que les mêmes références ont été conservées pour les pièces similaires.

Dans cette seconde réalisation, le dispositif prévoit un moyen complémentaire assurant un verrouillage en position sur le rail, que le dispositif soit en situation opératoire ou en position de stockage. Dans cette mise en oeuvre, on prévoit ainsi un sécurité supplémentaire pour l'opérateur et la stabilité des véhicules tenus par les moyens de calage.

Plus spécifiquement, chaque curseur (5) profilé en boucle s'ajuste à coulissement sur le rail de guidage (4) pour recevoir un organe de verrouillage et de blocage en position du dispositif sur le rail. Ledit moyen de verouillage est par ailleurs agencé pour autoriser le pivotement contrôlé du longeron formant cale. Plus particulièrement le curseur est agencé sur sa partie horizontale supérieure avec une ouverture (5.2) susceptible d'autoriser l'engagement d'un axe (20) formant piston coulissant d'une manière contrôlée dans un manchon (21) fixé verticalement sur ledit curseur autour de ladite ouverture (5.2). Le manchon est solidarisé de toute manière appropriée au curseur par soudure ou autrement. Il est en outre agencé intérieurement avec un chambrage (21.1) orienté côté curseur pour servir d'appui et de centrage à un moyen élastique de rappel (R). Ce moyen élastique prend appui contre le fond du chambrage et sur la partie inférieure de la tête (20.1) de l'axe formant vérin ; ladite tête étant susceptible de traverser ou non l'ouverture (5.2) formée sur le curseur. A son extrémité supérieure, le manchon (21) présente une rondelle (22) ou moyen équivalent susceptible de servir de butée et limiteur de course d'un moyen intermédiaire (M) associé à la cale. Selon une disposition complémentaire l'axe (20) se prolonge et déborde de la rondelle (22) et est agencé à son extrémité pour recevoir à articulation contrôlée un moyen de commande sollicitant le déplacement de l'axe (20) en hauteur avec un effect de came. Plus spécifiquement, ce moyen formant chape (23) et est associé à un levier de manoeuvre (24).

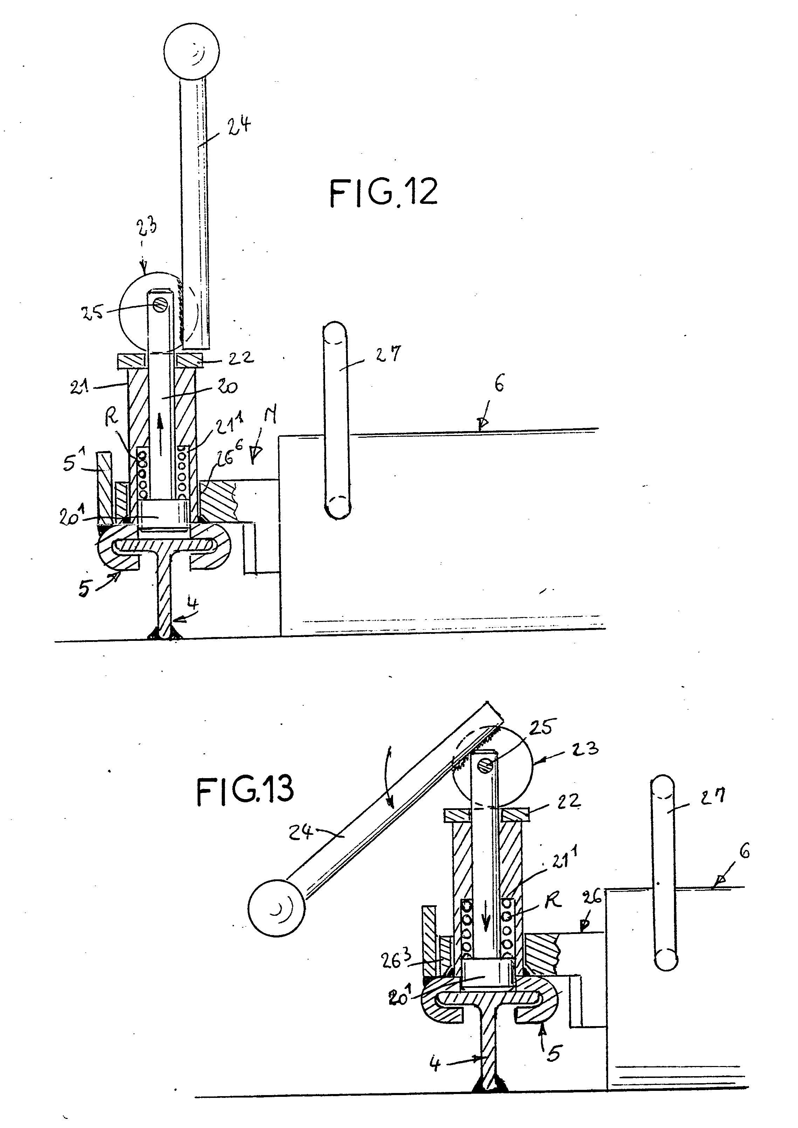

Plus précisémment, ce moyen formant chape comprend deux flasques profilés (23.1) susceptibles d'entourer l'extrémité de l'axe (20) étant solidarisé à celle-ci par un axe de liaison (25). De manière particulièrement avantageuse, l'ouverture ménagée (23.2) sur chaque chape recevant l'axe (25) est déportée axialement pour réaliser un effet de came lors du mouvement du levier. Par ailleurs, les flasques ont avantageusement un profil circulaire et viennent en appui ponctuellement sur la rondelle (22). Le levier de manoeuvre est rapporté et soudé entre les flasques ou solidarisé par tous moyens appropriés. Une telle disposition présente ainsi l'avantage de bloquer en position le curseur. En effet, le ressort est tout d'abord monté précontraint. En position de déplacement libre du curseur sur le rail, le levier (24) est en position relevée (figure 12) ; dans cette situation, la tête (20.1) de l'axe ne déborde pas de l'épaisseur du curseur ou du manchon et n'a donc aucun contact avec le rail. En position levier abaissé, celui-ci par la rotation des flasques sur eux-mêmes provoque un effet de came contribuant à abaisser l'axe (20). Ainsi, la tête (20.1) inférieure débouche de l'épaisseur du curseur et vient en appui ferme et serrage sur le rail de guidage (figure 13). De par cette conception, on assure une sécurité complémentaire de position du dispositif. En l'absence de relevage du levier, le dispositif selon l'invention ne peut être déplacé.

Dans cette même réalisation, la hauteur du manchon est établie pour recevoir le moyen intermédiaire (M) associé à la cale. Ce moyen intermédiaire peut être du type de celui décrit dans la première réalisation. Avantageusement, il peut être agencé sous une forme sensiblement différente illustrée en particulier figure 11. Ce moyen intermédiaire présente une forme profilée constituant un sabot (26) dont une partie formant base (26.1) est insérée et maintenue dans le longeron profilé (6) formant cale. Le sabot est ainsi inséré partiellement et près de l'extrémité du longeron en regard du curseur en étant maintenu et solidarisé par tous moyens d'assemblage ou thermo-soudure. Il présente à cet effet des pans (26.2) latéraux venant plaquer contre les faces en regard du longeron. Dans sa partie avant, ledit sabot déborde du longeron et présente tout d'abord une patte (26.3) de forme arrondie aménagée dans sa partie centrale avec une ouverture (26.6) pour s'engager autour du manchon asservi au curseur. La patte est de faible épaisseur et réalisée en laissant un dégagement libre dans la partie inférieure avant. Par ailleur, le sabot est aménagé entre sa base (26.1) et la patte débordante (26.3) dans le prolongement des pans latéraux (26.2) avec des pans coupés (26.4) susceptibles de venir en appui et contact sur une large surface des chants du rail de guidage associé.

Ainsi, selon cet aménagement, le sabot et donc le longeron formant cale, peuvent coulisser en hauteur le long du manchon permettant le dégagement de la cale par rapport au rail de guidage et son orientation angulaire. La hauteur du manchon est telle que la cale peut être soulevée de quelques centimètres correspondant à la hauteur du rail avec un jeu supplémentaire pour faciliter son pivotement, la patte (26.3) du sabot (26) venant alors en butée contre la rondelle supérieure (22).

Ainsi dans cette réalisation, le soulèvement du longeron formant cale est limité en hauteur et évite toute manipulation malencontreuse pouvant entraîner des chocs avec les carrosseries ou soubassements de véhicules.

Le sabot présente enfin un dégagement interne (26.5) en forme de U pour se centrer sur le rail de stockage du dispositif.

Selon une autre disposition prévue de cette réalisation, une poignée de manoeuvre (27) est disposée sur la largeur près de la zone de liaison avec le sabot. L'opérateur soulève donc sans difficulté le longeron.

L'extrémité avant du longeron ne présente aucune ouverture de préhension obligeant l'opérateur à manipuler le dispositif à partir de la seule poignée de manoeuvre (27).

Cette seconde mise en oeuvre du dispositif selon l'invention présente plusieurs avantages.

Tout d'abord, elle définit deux zones d'ancrage du dispositif sur le rail en cas d'utilisation et une zone d'ancrage en position de stockage. En position d'utilisation, on obtient un positionnement angulaire du longeron formant cale par appui et butée du sabot (26) sur le rail et en particulier des faces profilées (26.4). Le blocage en position est complété par l'abaissement du levier de manoeuvre associé au curseur et donc appui de la tête de l'axe de liaison sur le rail. En position stockage du longeron sur le rail, le levier de manoeuvre intervient pour assurer la fonction de verrouillage en position.

Un autre avantage de cette mise en oeuvre réside dans la facilité de montage et démontage de ses différents éléments.

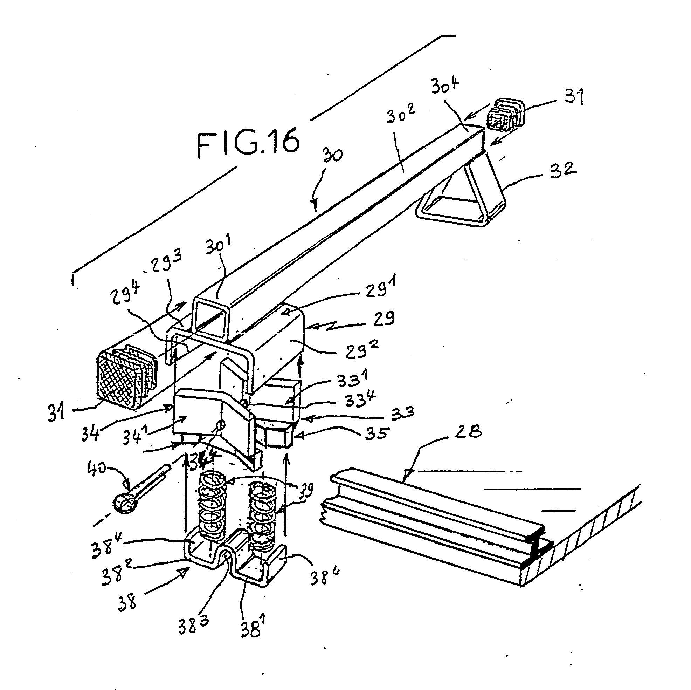

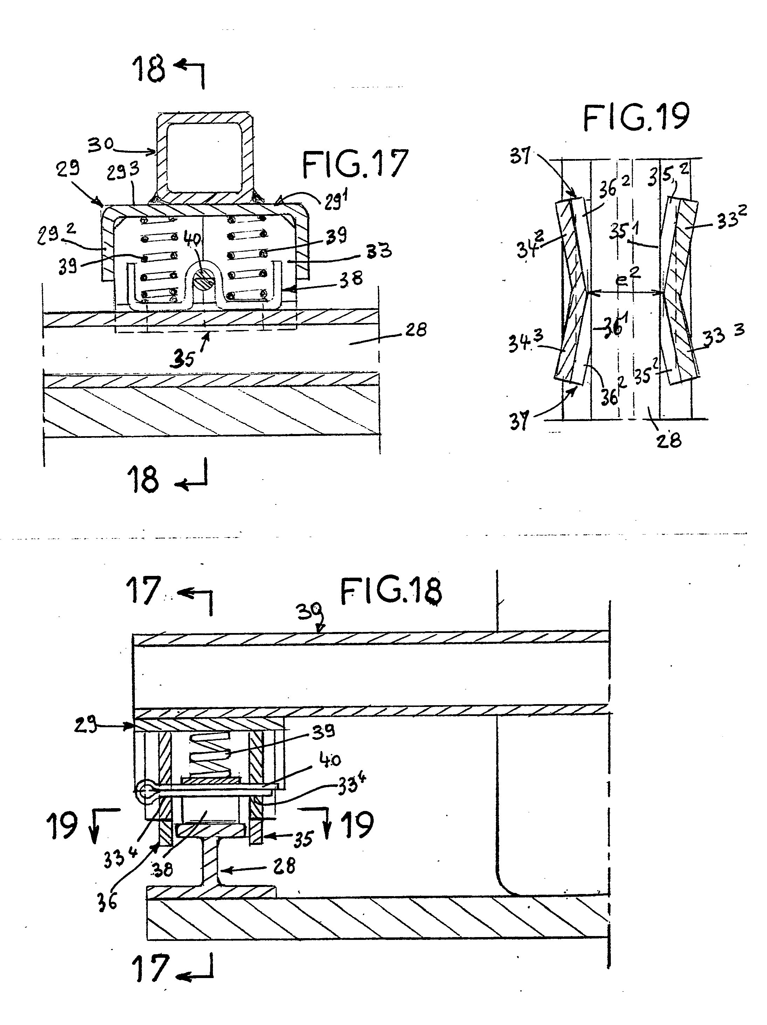

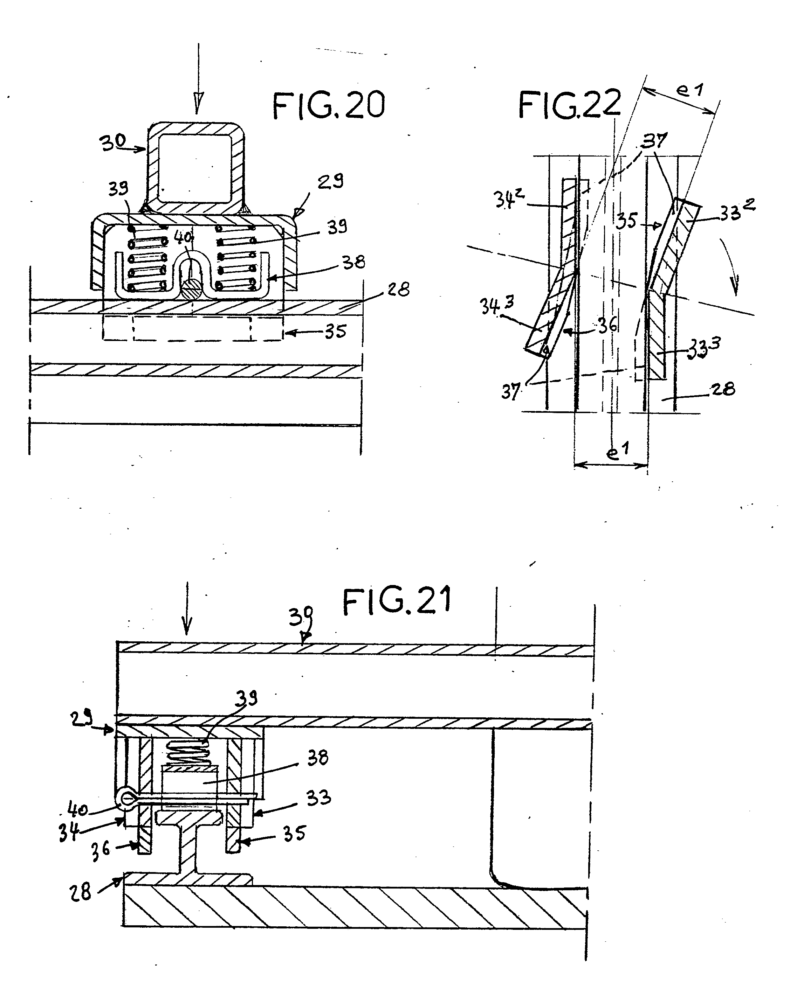

On a illustré en variante une autre mise en oeuvre de l'invention aux figures 16 à 22. On utilise tout d'abord un rail profilé (28) en H dont l'une des parois est fixée par tous moyens appropriés sur le plancher, contribuant ainsi à lui donner une grande stabilité. Le dispositif comprend un curseur profilé (29) et agencé pour être déplacé sur le rail de guidage et en particulier sur l'autre paroi du profil en H et être bloqué en position sur ce dernier, ledit curseur constituant en outre par sa partie supérieure la base d'appui de l'élément de calage (30).

Plus spécifiquement, le curseur (29) est agencé avec un profil en U (29.1) dont les ailes (29.2) se trouvent orientées dans un plan perpendiculaire au rail et dans le même plan que l'élément de calage proprement dit, tandis que la base (29.3) du curseur est située dans le plan supérieur pour servir d'appui fixe à l'une des extrémités (30.1) de l'élément de calage formant bras. Ce dernier est ainsi avantageusement réalisé sous forme d'un profilé creux (30.2) de section carrée par exemple recevant à ses extrémités des embouts (31) ou caches. La seconde extrémité (30.3) du profilé de calage est agencée pour coopérer avec un support (32) profilé en triangulation par exemple pour coopérer et venir en appui sur le plancher du transporteur. Les ailes (29.2) du curseur sont ainsi dans le même plan que le bras de calage (30) mais en débordement extérieur de part et d'autre de celui-ci.

Selon une disposition particulière de l'invention, ledit curseur (29) profilé en U est ainsi agencé pour recevoir entre ses ailes et près des extrémités de celles-ci deux pattes profilées (33-34) identiques orientées et fixées en regard contre la face intérieure (29.4) de la base (29.3) du curseur. Ces pattes sont ainsi agencées dans leur ensemble avec deux zones bien distinctes servant d'une part au positionnement du curseur sur le rail de guidage et d'autre part au blocage dudit curseur sur le rail, et donc de la cale. Plus particulièrement, les pattes (6, 7) comprennent à partir de la base du curseur, chacune un profilé évasé en V (33.1-34.1) dont les branches (33.2-33.3) (34.2-34.3) sont très largement ouvertes. Il y a lieu de préciser que les pans d'inclinaison des deux pattes sont parallèles deux à deux (32.2-34.3) (33.3-34.2) avec un espacement (e.1) de dimension sensiblement supérieure à la largeur du rail de guidage, ceci pour venir en appui contre ce dernier lors de l'angulation donnée au dispositif. Lesdits profilés en V (33-34) sont par ailleurs de hauteur sensiblement supérieure aux ailes (29.2) du curseur. Lesdits profilés en V sont fixés par soudure ou autre au fond du curseur. Ils se prolongent en outre à leur partie inférieure par une plaquette profilée (35-36) monobloc présentant une zone rectiligne (35.1-36.1) de grande longuer et se prolongeant à ses extrémités avec des pans (35.2-36.2) obliques orientés vers l'extérieur. Les plaquettes (35-36) sont montées en opposition et leur espacement (e.2) est également sensiblement supérieur à la largeur du rail de guidage. Ainsi qu'il apparait aux figures des dessins, lesdites plaquettes qui prennent appui et fixation dans la zone d'angle des profilés en V (33-34) se prolongent en débordement intérieur de ceux-ci afin de définir un décrochement (37) à chaque angle de superposition des profilés et des plaquettes et dont la fonction sera précisée par la suite.

Selon une autre disposition, la cavité formée par les ailes (29.2) du curseur et les profilés en V (33-34) autorise le positionnement d'un chapeau (38) profilé ou patin et de un ou plusieurs moyens (39) de rappel élastique sous forme de ressort par exemple.

Ce chapeau (38) est profilé pour s'ajuster dans la cavité dans le sens longitudinal entre les plaquettes précitées et la zone d'angle des profilés en V. Ce chapeau formant obturateur présente deux sections successives (38.1-38.2) en U raccordées par un profil (38.3) inverse formant gorge. Les extrémités latérales (38.4) desdites sections forment des rabats pour permettre le centrage des moyens élastiques précités. Ces derniers viennent en appui contre la face intérieure de fond du curseur pouvant être aménagée avec un évidement de centrage et les faces intérieures du chapeau formant sièges de moyens élastiques. Afin de retenir ledit chapeau à l'encontre des moyens élastiques précités, il est prévu d'utiliser un moyen de verrouillage (40) du type vis, goupille ou autre s'engageant à cet effet dans des ouvertures (33.4-34.4)) ménagées dans les parties d'angle des profilés en V, le moyen de verrouillage étant ensuite inséré dans la gorge de réception du chapeau précité. Ainsi, ce dernier est constamment maintenu et limité en position.

Le moyen de verrouillage se situe sensiblement dans un plan médian de chaque profilé en V de sorte à ne pas déborder du plan défini par les extrémités des ailes du curseur. Par ailleurs, ce chapeau ainsi profilé présente une face extérieure plane avec deux parties d'appui (38.4) susceptibles de venir en contact sur le rail de guidage. Ainsi le dispositif constitue après montage un ensemble monobloc.

Le dispositif dans cette variante ainsi décrit, il convient maintenant d'exposer son mode d'utilisation en se référant en particulier aux figures des dessins.

Lorsqu'un véhicule est positionné sur le transporteur, il convient d'utiliser le dispositif décrit pour chaque blocage de roue. L'opérateur présente chaque dispositif en regard d'un rail et le prépositionne sur le rail. Ce prépositionnement consiste à engager et centrer le curseur par ses plaquettes sur le rail, lesdites plaquettes venant de part et d'autre du profil de celui-ci à ajustement libre. Leurs extrémités à pans obliques (35.2-36.2) permettent et facilitent ainsi l'introduction du curseur. Le curseur vient alors en appui en particulier par son chapeau (38) sur la face supérieure du rail. Ce prépositionnement s'effectue alors dans un plan perpendiculaire du moyen de calage par rapport au rail. Pour assurer le blocage en position et l'orientation angulaire du dispositif, l'opérateur doit alors effectuer une pression sur le curseur par appui du pied par exemple et ceci à l'encontre du moyen élastique. Sous la force exercée le chapeau s'escamote à l'encontre des moyens élastiques précités et permet l'engagement plus en profondeur du curseur sur le rail de guidage. De par cette action le curseur peut être abaissé de sorte que les plaquettes (35-36) se trouvent dans un plan inférieur à la section supérieure du rail de guidage. Dans ces conditions ainsi qu'il apparait aux dessins, le dispositif de calage peut être déplacé angulairement selon une orientation donnée et limitée par les pans des éléments profilés en V (34-35). Les décrochements intérieurs (37) formés à chaque angle du dispositif viennent alors en blocage sous la face supérieure du rail en permettant ainsi un autopositionnement. Le dispositif est parfaitement maintenu en position par les pans (34.2-35.3) ou (34.3-35.2) des éléments en V précités, avec les décrochements correspondants. En outre, de part leur position en égard des éléments profilés en V, les extrémités à pans obliques augmentent la surface de contact et de butée.

On obtient ainsi un autoblocage du dispositif de calage. Pour modifier sa position, il est nécessaire d'exercer à nouveau une pression à l'encontre des moyens élastiques précités puis d'orienter dans un plan perpendiculaire au rail de guidage, le moyen de calage en libérant les éléments constitutifs du curseur par rapport au rail.

Le dispositif peut alors être enlevé manuellement ou déplacé le long du rail en vue d'une autre intervention.

Le curseur est ainsi directement agencé avec des moyens assurant son positionnement sur le rail de guidage ainsi que son blocage en position par rapport au rail et ainsi en assurant le positionnement de l'élément de calage.

Il y a en outre aucun moyen supplémentaire de liaison et d'articulation entre le curseur et le bras de calage.

Les avantages ressortent bien de l'invention. On souligne en particulier la conception simplifiée du dispositif, son faible cout de fabrication, et la sureté de la fixation.
La manipulation est aisée et peut être exercée sans difficulté.

Ainsi dans les différentes mises en oeuvre, le dispositif selon l'invention est remarquable par sa simplicité de réalisation, sa maniabilité aisée, la sureté de positionnement et de maintien du véhicule.

## Revendications

-1- Dispositif de calage de véhicules disposés sur des planchers de remorques de transport ou wagons de chemin de fer et moyens de transport similaires du type comprenant un rail de guidage profilé disposé sur l'aire de stockage recevant à déplacement contrôlé et limité des moyens sous forme de curseurs associés à des moyens de calage, lesdits moyens de calage pouvant être pivotés angulairement caractérisé en ce qu'il comprend des rails de guidage (4) (28) de part et d'autre de l'aire de stockage des véhicules, lesdits rails étant profilés pour recevoir à déplacement contrôlé et limité des moyens sous forme de curseurs (5) (29) à partir desquels sont associés les moyens de calage (6) (30), lesdits curseur étant agencés directement ou avec des moyens pour venir après orientation angulaire en butée d'appui pour coopérer avec le profil des rails de guidage afin d'assurer un blocage en position des moyens de calage sans autres moyens de liaison intermédiaire.

-2- Dispositif selon la revendication 1 caractérisé en ce que lesdits moyens de calage peuvent être pivotés angulairement pour être soit en position de stockage sur les rails, soit en position de butée contre les roues du véhicule à retenir.

-3- Dispositif selon l'une quelconque des revendications 1 et 2 caractérisé en ce que chaque rail de guidage présente un profil en T, sa base (4.1) étant fixée au plancher du transporteur, sa partie supérieure (4.2) servant de profil de guidage d'une pluralité de curseurs (5) chacun étant associé à un moyen de calage (6).

-4- dispositif selon l'une quelconque des revendications, 1, 2 et 3 caractérisé en ce que chaque curseur (5) présente un profil en boucle non fermée s'engageant et coulissant sur le profil du rail de guidage ; chaque curseur présentant dans chaque partie supérieure en débordement un moyen de liaison et d'articulation (7-21) autour duquel pivote de manière contrôlée dans un plan horizontal un moyen intermédiaire (8 - 26) associé directement ou indirectement au longeron formant cale.

-5- Dispositif selon la revendication 4 caractérisé en ce que ledit moyeu de liaison et d'articulation (7) est un axe formant moyau coopérant avec le moyen (8) établi sous forme d'une semelle support ; ledit axe (7) s'engageant dans une lumière oblongue (8.1) formée dans la semelle support ; une bague de compression (11) disposée sur l'axe (7) étant logée dans un chambrage (8.2) formé dans l'épaisseur de ladite semelle ; l'organe d'orientation angulaire de celle-ci selon un mouvement axial par rapport à l'axe (7) assurant une compression de la bague et mise en pression.

-6- Dispositif selon l'une quelconque des revendications 4 et 5 caractérisé en ce que ladite semelle support (8) présente un profil latéral à pans coupés (8.3) de dégagement de part et d'autre de son axe de pivotement ; et dans sa partie arrière, elle reçoit un moyen d'accouplement et de liaison avec un élément profilé en U (9) de préhension manuelle et solidaire du moyen de calage (6).

-7- Dispositif selon la revendication 6 caractérisé en ce que le moyen d'accouplement est un axe (13) débordant de par ses extrémités du plan de ladite semelle support ; ledit axe s'engageant dans des lumières oblongues (9.2) établies sur les branches latérales (9.1) de l'élément profilé en U.

-8- Dispositif selon l'une quelconque des revendications 6 et 7 caractérisé en ce que l'élément profilé (9) en U, solidaire du moyen de calage présente des ailes ou branches latérales recouvrant partiellement les côtés latéraux de ladite semelle support (8) ; les chants (9.3) desdites branches étant profilés pour venir en butée d'appui contre le rail lors de l'utilisation du dispositif ; l'élément profilé (9) étant agencé sur sa face de fond (9.4) avec dans sa partie supérieure une découpe oblongue (9.5) autorisant sa préhension manuelle, et dans sa partie inférieure avec une découpe (9.6) permettant son chevauchement sur le rail de guidage, en position repos.

-9- Dispositif selon l'une quelconque des revendications 6, 7 et 8 caractérisé en ce que l'élément profilé (9) présente en opposition aux moyens de liaison avec la semelle support (8) une partie profilée formant cale établie sous forme de longerons de grande longueur dont la base (6.1) est en appui sur le plancher du transporteur ; ladite base étant agencée avec une fente longitudinale (6.3) de passage du rail de guidage et autorisant ainsi en position repos le chevauchement de l'élément profilé sur le rail.

-10- Dispositif selon la revendication 9 caractérisé en ce que l'extrémité du longeron formant cale présente un flasque d'appui (15) au sol, ledit flasque étant agencé avec une ouverture (15.1) autorisant la préhension manuelle du dispositif.

-11- Dispositif selon la revendication 4, caractérisé en ce que chaque curseur (5) est agencé pour recevoir un moyen de verrouillage et blocage en position du dispositif sur le rail de guidage et autorisant le pivotement contrôlé du longeron formant cale.

-12- Dispositif selon la revendication 11, caractérisé en ce que le curseur (5) est agencé sur sa partie horizontale supérieure avec une ouverture (5.2) autorisant l'engagement d'un axe (20) formant piston coulissant dans un manchon (21) fixé verticalement sur ledit curseur autour de ladite ouverture (5.2) ; la partie inférieure de l'axe formant tête traversant ladite ouverture (5.2) et pouvant venir en appui contrôlé sur le rail de guidage ; et en ce que l'extrémité supérieure de l'axe coopère avec un moyen de commande sollicitant le déplacement en hauteur de l'axe avec un effet de came.

-13- Dispositif selon la revendication 12, caractérisé en ce que le moyen sollicitant en déplacement l'axe (20) comprend deux flasque (23.1) formant chape (23) entourant l'extrémité de l'axe (20) et étant associés par un axe de liaison (25) déporté axialement ; lesdits flasques étant associés à un levier de manoeuvre (24) ; lesdits flasques présentant un profil circulaire coopérant en appui sur une rondelle (22) disposée centrée à l'extrémité supérieure du manchon (21).

-14- Dispositif selon la revendication 12, caractérisé en ce que le manchon (21) est agencé intérieurement avec un chambrage (21.1) orienté côté curseur et servant d'appui et centrage d'un moyen élastique de rappel (R) monté précontraint et prenant appui sur la face interne de la tête de l'axe (20) formant piston.

-15- Dispositif selon les revendications 11 et 12 ensemble, caractérisé en ce qu'un moyen intermédiaire (M) est monté pivotant autour du manchon (21) et est limité en déplacement axial par la rondelle (22) formant butée et limiteur de course en hauteur ladite rondelle étant disposée dans la plan supérieur du manchon.

-16- Dispositif selon la revendication 15, caractérisé en ce que le moyen intermédiaire présente une forme profilée constituant un sabot (26) ; ledit sabot présentant une base (26.1) insérée et maintenue dans et près de l'extrémité du longeron formant cale en regard du curseur, et une patte (25.3) en débordement de forme arrondie aménagée avec une ouverture (26.6) pour s'engager autour du manchon (21), et des pans latéraux profilés et coupés (26.4) pour servir de plan d'appui et de contact sur les chants du rail de guidage.

-17- Dispositif selon la revendication 16, caractérisé en ce que le sabot (26) présente des parois latérales (26.3) solidarisées avec les parois en regard du longeron formant cale ; la base du sabot présentant un dégagement inférieur en U pour se centrer sur le rail de guidage en position stockage.

-18- Dispositif selon la revendication 15 caractérisé en ce qu'une poignée de manoeuvre (27) profilée en U est disposée près de l'extrémité du longeron formant cale en regard du curseur.

-19- Dispositif selon la revendication 1 caractérisé en ce que le rail de guidage est profilé en H avec une paroi fixée sur le plancher du transporteur et l'autre paroi servant de guidage à un moyen curseur (29), et en ce que le moyen curseur est agencé avec un profil en V (29.1) recevant à sa partie supérieure l'extrémité d'un profilé constituant la cale, et étant agencé entre ses ailes latérales (29.2) avec des pattes (33-34) profilées identiques orientées et fixées en regard, cesdites pattes présentant chacune des zones distinctes servant d'une part au positionnement du curseur sur le rail de guidage et d'autre part au blocage du curseur angulairement sur le rail et donc de la cale ; et en ce que les pattes précitées et les ailes (29.2) du curseur définissent entre elles une cavité autorisant le positionnement d'un chapeau ou patin venant en appui sur la face supérieure du rail à l'encontre de moyens élastiques (39).

-20- Dispositif selon la revendication 19, caractérisé en ce que les ailes (29.2) du curseur sont orientées dans un plan perpendiculaire au rail et dans le même plan que l'élément de calage (30) ; la base (29.3) du curseur étant située dans le plan supérieur pour servir d'appui et de fixation à l'extrémité (30.1) de l'élément de calage formant bras.

-21- Dispositif selon la revendication 20, caractérisé en ce que l'élément de calage est réalisé sous la forme d'un profilé creux (30.2) dont la seconde extrémité (30.3) est agencée pour coopérer avec un support (31) en triangulation pour venir en appui sur le plancher du transporteur.

-22- Dispositif selon l'une quelconque des revendications 19 et 20 caractérisé en ce que le curseur profilé en U est agencé pour recevoir entre ses ailes et près de ses extrémités deux pattes (33) et (34) profilées, lesdites pattes présentant à partir de la base du curseur chacune une forme profilée en V (33.1-34.1) dont les branches (33.2-33.3) (34.2.2-34.3) sont largement ouvertes.

-23- Dispositif selon la revendication 22 caractérisé en ce que les branches des éléments profilés en V présentent des pans d'inclinaison parallèles deux à deux (33.2-34.3) (33.3-34.2), avec un espacement (e1) de dimension sensiblement supérieure à la largeur du rail de guidage.

-24- Dispositif selon l'une quelconque des revendications 22 et 23 caractérisé en ce que les éléments profilés en V (33-34) sont de hauteur supérieure aux ailes (29.2) du curseur.

-25- Dispositif selon l'une quelconque des revendications 22, 23 et 24 caractérisé en ce que les profilés en V se prolongent dans leur partie supérieure par une plaquette (35-36) monobloc présentant notamment une zone intermédiaire rectiligne (35.1-36.1) de grande longueur, lesdites plaquettes définissant entre elles un espacement (e2) sensiblement supérieur à la largeur du rail de guidage.

-26- Dispositif selon la revendication 25, caractérisé en ce que des plaquettes prennent appui et fixation dans les zones d'angle des profilés en V (33-34) en se prolongeant par des pans (35.2-36.2) orientés vers l'extérieur et débordant intérieurement des profilés en V afin de définir un décrochement (37) à chaque angle, autorisant après orientation angulaire du dispositif de calage le maintien, blocage, et verrouillage en position de ce dernier.

-27- Dispositif selon l'une quelconque des revendications 19, 23, 24, 25 et 26 caractérisé en ce que la cavité formée entre les ailes (29.2) du curseur et les profilés en V (33-34) autorisent le positionnement d'un chapeau profilé ou patin (38) et de un ou plusieurs moyens intermédiaires (39) de rappel élastique.

-28- Dispositif selon la revendication 27 caractérisé en ce que le chapeau est profilé pour s'ajuster dans la cavité dans le sens longitudinal entre les plaquettes (35-36) et la zone d'angle des profilés en V, ledit chapeau présentant deux sections successives (38.1-38.2) profilés en V et raccordées par un profil intermédiaire (38.3) formant gorge et autorisant l'engagement d'un moyen de verrouillage (40) et de limitation de déplacement du type goupille maintenue dans les zones d'angle desdits éléments en V.

FIG.1

FIG.2

FIG. 3

FIG.4

FIG.5

FIG.6

FIG.8.

FIG.7

FIG.9

FIG.10

FIG.11

FIG.12

FIG.13

# FIG.14

# FIG.15

FIG.16

FIG.17

FIG.19

FIG.18

# FIG.20

30

39

40

39

29

39

38

28

35

# FIG.22

$e1$

37

$34^2$

35

$33^2$

34.3

36

37

$33^3$

28

$e1$

# FIG.21

39

29

39

38

40

34

33

36

35

28

Office européen des brevets

**RAPPORT DE RECHERCHE EUROPEENNE**

Numero de la demande

EP    89 42 0403

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | FR-A-2419198 (VEB WAGGONBAU_NIESKY)<br>* page 2, ligne 12 – page 3, ligne 10; figures 1-4 *<br>--- | 1, 2 | B60P3/077 |
| X | FR-A-2376017 (VEB WAGGONBAU NIESKY)<br>* page 3, ligne 29 – page 4, ligne 34; figures 1-3 *<br>--- | 1, 2 | |
| A | EP-A-0284532 (LOHR INDUSTRIE)<br>* page 2, ligne 15 – page 6, ligne 27; figures 1-14 *<br>----- | 1 | |

| | | | DOMAINES TECHNIQUES RECHERCHES (Int. Cl.5 ) |
|---|---|---|---|
| | | | B60P |

Le présent rapport a été établi pour toutes les revendications

| Lieu de la recherche | Date d'achèvement de la recherche | Examinateur |
|---|---|---|
| LA HAYE | 01 FEVRIER 1990 | VANNESTE M.A.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................................................................
& : membre de la même famille, document correspondant

EPO FORM 1503 03.82 (P0402)